# FASCICULE DE BREVET EUROPEEN

(11) **EP 1 190 881 B1**
(45) Date de publication et mention de la délivrance du brevet: **29.06.2011**
(21) Numéro de dépôt: 01402101.8
(22) Date de dépôt: 02.08.2001
(51) Int. Cl.: B60J 7/14

(54) **Véhicule décapotable à toit rigide constitué de deux panneaux indépendants basculables respectivement de pavillon et de lunette arrière**
Cabrio- Fahrzeug mit einem starren Dach bestehend aus zwei unabhängigen, schwenkbaren Deckeln für jeweils das Dach und die Heckscheibe
Convertible car equipped with a rigid roof formed by two independently tiltable panels respectively for the roof and for the back window

(30) Priorité: 21.09.2000 FR 0012037
(43) Date de publication de la demande: 27.03.2002
(73) Titulaire: Peugeot Citroën Automobiles SA, 92200 Neuilly sur Seine (FR)
(72) Inventeur: Roman, Olivier, 25400 Audincourt (FR); Marguin, Pierre, 90120 Mezire (FR)

(56) Documents cités:
- EP-A- 0 884 208
- FR-A- 2 791 007
- US-A- 5 078 447

## Description

La présente invention concerne un véhicule décapotable à toit rigide comprenant deux panneaux indépendants basculables, respectivement de pavillon et de lunette arrière.

On connaît de tels véhicules selon lesquels les deux panneaux de pavillon et de lunette arrière sont commandés afin de permettre leur basculement, par l'intermédiaire d'un système de biellettes, d'une position de fermeture du toit à laquelle les deux panneaux sont jointivement juxtaposés de façon étanche à une position d'ouverture du toit à laquelle les deux panneaux sont escamotés dans une partie du coffre arrière du véhicule en étant disposés parallèlement l'un au-dessus de l'autre.

Cependant, l'agencement à biellettes de basculement des panneaux de pavillon et de lunette arrière du toit engendre des jeux latéraux tels qu'ils provoquent de légers déplacements en direction transversale au véhicule du panneau de lunette arrière relativement au panneau de pavillon aussi bien lors de leur déplacement entre les deux positions de fermeture et d'ouverture du toit que lors de leur position fermée du toit. De tels déplacements peuvent se traduire, lors du basculement des deux panneaux vers leur position de fermeture par un léger décalage transversal l'un par rapport à l'autre de ces deux panneaux de telle sorte qu'ils ne sont pas correctement mis en place à leur position de fermeture. En outre, à cette position de fermeture, les deux panneaux peuvent débattre l'un par rapport à l'autre et occasionner ainsi des problèmes d'étanchéité et des bruits désagréables aux occupants du véhicule.

Un premier art antérieur divulgué dans le document US 5 078 447 divulgue un panneau de toit supporté par des supports latéraux. En position de fermeture du toit, un dispositif de centrage comprenant un doigt solidaire d'un support latéral s'engage dans un évidemment réalisé dans un montant du pare-brise.

Le document EP-A-1 159 149, publiée en tant que demande de brevet internationale WO-A-00/54997 est un état de la technique au titre des articles 54(3) et (4) de la CBE. Ce document divulgue un dispositif de verrouillage réalisé par un doigt solidaire du panneau de toit et qui s'engage dans un panneau de lunette arrière.

La présente invention a pour but d'éliminer les inconvénients ci-dessus en proposant un véhicule automobile selon la revendication 1 principale.

Le doigt fait saillie du bord transversal du panneau correspondant perpendiculairement à celui-ci et l'évidement de réception de ce doigt débouche au niveau du bord transversal de l'autre panneau et sur lequel vient en appui le bord transversal du panneau à doigt en position de fermeture des deux panneaux.

Le doigt et l'évidement de réception de celui-ci sont situés respectivement sur les faces internes des deux panneaux à leur position de fermeture.

De préférence, le doigt est solidaire du panneau de lunette arrière et l'évidement est réalisé dans le panneau de pavillon.

Selon une première variante de réalisation, le véhicule comprend un seul dispositif de centrage et de limitation du débattement, dont le doigt s'étend centralement suivant une direction parallèle à l'axe longitudinal du véhicule en position de fermeture des deux panneaux.

Selon une seconde variante de réalisation, le véhicule comprend deux dispositifs de centrage et de limitation du débattement, dont les deux doigts sont disposés de chaque côté du panneau correspondant en s'étendant suivant une direction parallèle à l'axe longitudinal du véhicule en position de fermeture des deux panneaux.

Chaque doigt s'engage dans l'évidement correspondant suivant un faible jeu ou sans jeu.

Chaque évidement est réalisé à partir d'une tôle cintrée solidaire du panneau correspondant de préférence occultée par une garniture interne de recouvrement et les moyens de fixation de chaque doigt au panneau correspondant sont de préférence occultés par une garniture interne de recouvrement.

Le véhicule est du type où les deux panneaux ont leur mouvement de basculement commandé par l'intermédiaire d'un système de biellettes permettant de ranger les panneaux dans le coffre arrière de façon que les panneaux soient disposés sensiblement parallèlement l'un au-dessus de l'autre.

L'invention sera mieux comprise et d'autres buts, caractéristiques, détails et avantages de celle-ci apparaîtront plus clairement au cours de la description explicative qui va suivre faite en référence aux dessins annexés donnés uniquement à titre d'exemple illustrant un mode de réalisation de l'invention et dans lesquels :
- la figure 1 est une vue partielle en perspective d'un véhicule décapotable à toit rigide auquel s'applique l'invention ;
- la figure 2 est une vue agrandie en perspective suivant la flèche II de la figure 1 et représentant un dispositif de centrage et de limitation de débattement des deux panneaux de toit du véhicule ;
- la figure 3 est une vue arrière en perspective représentant le coffre arrière du véhicule en position d'ouverture pour montrer les deux panneaux en position rangée dans celui-ci ;
- la figure 4 est une vue agrandie de la partie cerclée en IV de la figure 3 ;
- la figure 5 est une vue partielle en perspective du coffre arrière du véhicule montrant les deux panneaux dans une position intermédiaire avant leur position rangée dans le coffre ; et
- la figure 6 est une vue partielle en perspective des deux panneaux du toit vus de l'intérieur du véhicule et occupant une position entrouverte.

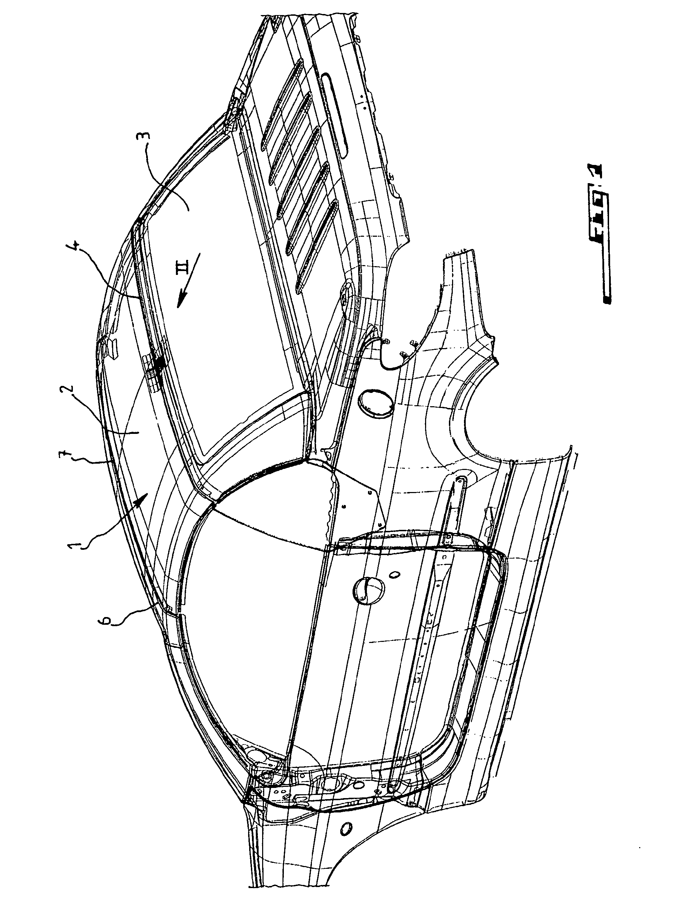

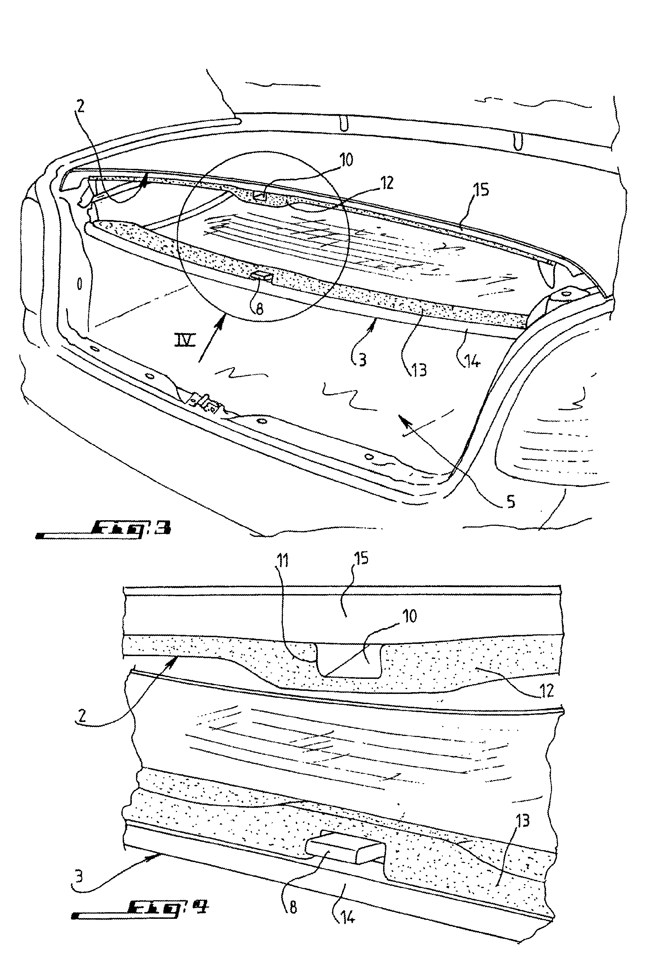

Le véhicule automobile représenté partiellement en figure 1 est du type décapotable à toit rigide 1 qui comprend deux panneaux indépendants de toit, respectivement de pavillon 2 et de lunette arrière 3 pouvant occuper, comme représenté, une position de fermeture du toit à laquelle les deux panneaux 2, 3 sont jointivement juxtaposés transversalement au véhicule de façon étanche comme indiqué en 4 ou une position d'ouverture du toit à laquelle les deux panneaux 2, 3 sont rangés en partie supérieure du coffre arrière 5 du véhicule comme représenté en figure 3.

En position de fermeture du toit, le panneau de pavillon 2 est en appui étanche contre l'encadrement de pare-brise 6 du véhicule comme indiqué par la ligne transversale de jonction 7 en figure 1.

Le basculement commandé des deux panneaux 2, 3 entre les deux positions de fermeture et d'ouverture du toit s'effectue par l'intermédiaire d'un système de biellettes (non représenté), connu en soi, et qui permet à ces deux panneaux d'être rabattus en position rangée dans le coffre arrière 5 de telle façon que le panneau de pavillon 2 soit disposé parallèlement au-dessus du panneau de lunette arrière 3.

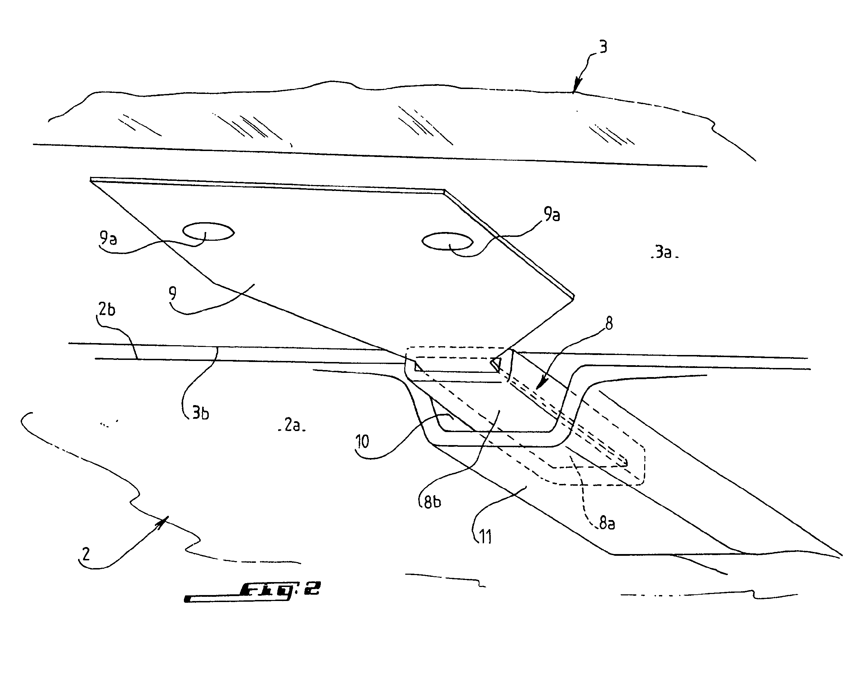

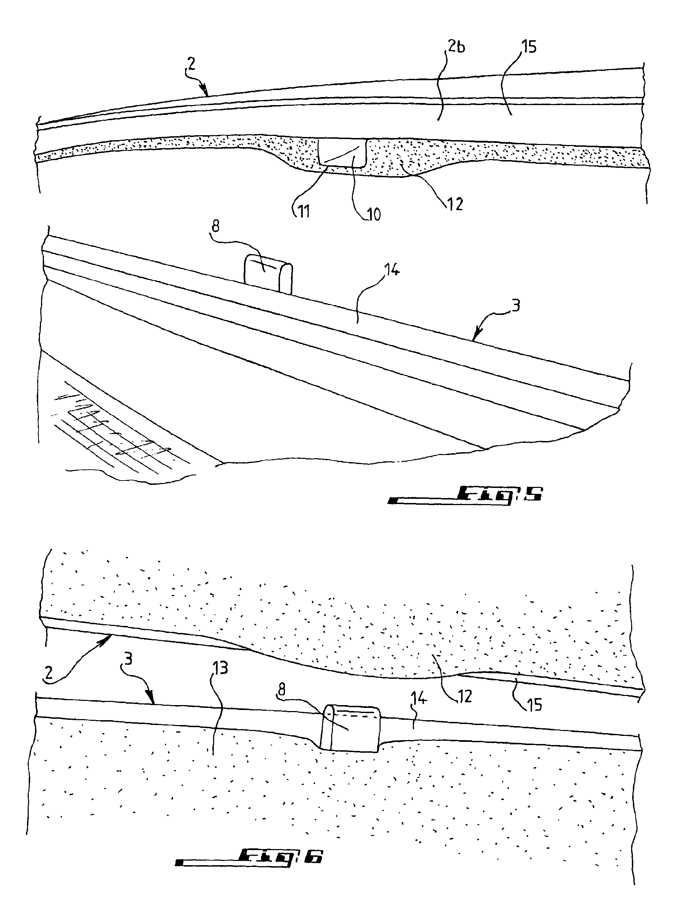

Selon l'invention, comme représenté aux figures 2 à 6, le véhicule est équipé d'un dispositif permettant de centrer les deux panneaux 2, 3 à leur position de fermeture et de limiter leur débattement relatif transversalement au véhicule à cette position.

Ce dispositif comprend un doigt 8 solidaire d'une plaque métallique rigide 9 fixée par des vis de fixation 9a, à la face interne 3a, située à l'intérieur du véhicule, du panneau de lunette arrière 3 en considérant celui-ci en position de fermeture du toit comme représenté notamment en figure 2. Le doigt 8 peut être réalisé par une languette métallique rigide 8a solidaire de la plaque 9 recouverte, par surmoulage, d'une pièce en matière plastique 8b sensiblement en forme de parallélépipède rectangle plat. Le doigt 8 fait saillie du bord transversal 3b du panneau 3 perpendiculairement à celui-ci en s'étendant parallèlement à l'axe longitudinal du véhicule en position de fermeture des deux panneaux 2, 3. De préférence, le doigt 8 occupe une position centrale relativement au panneau 3. La matière plastique de la pièce 8b est choisie en fonction des tolérances de fabrication et pour générer le moins de bruit possible notamment lors de la fermeture des panneaux 2, 3.

Le dispositif de centrage et de limitation comprend en outre un évidement 10 réalisé dans une feuille de tôle rigide cintrée 11 fixée, par exemple par soudage, à la face interne 2a du panneau de pavillon 2, en considérant celui-ci en position de fermeture avec le panneau de lunette arrière 3. L'évidement 10 est destiné à recevoir le doigt 8 en position de fermeture des deux panneaux 2, 3 soit suivant un faible jeu, soit sans aucun jeu, l'essentiel étant que le doigt 8 et l'évidement 10 assurent la fonction de centrage du pavillon 3 relativement au pavillon 2 et de limitation de leur débattement relatif en position de fermeture du toit. Bien entendu, la longueur du doigt 8 est choisie de façon à ne pas gêner le basculement relatif des deux panneaux aussi bien lors de l'ouverture que de la fermeture du toit du véhicule.

L'avantage d'utiliser les vis de fixation 9a de la plaque 9 est de permettre au doigt 8 de s'auto-positionner, avant serrage complet des vis, en entrant dans l'évidement 10 lors de la première manoeuvre de fermeture des deux panneaux 2, 3, et il n'y a plus ensuite qu'à fixer la plaque 9 par serrage énergique des vis 9a de sorte que le doigt 8 est correctement positionné transversalement au véhicule indépendamment des tolérances entre les deux panneaux mobiles 2, 3. Autrement dit, la fixation par vissage du doigt 8 assure un réglage automatique de position de celui-ci.

L'évidement 10 débouche de préférence au niveau du bord transversal 2b du panneau de pavillon 2 et sur lequel vient en appui le bord transversal 3b du panneau de lunette arrière 3 en position de fermeture du toit.

La tôle cintrée 11 de formation de l'évidement 10 est occultée par une garniture interne de recouvrement 12 appliquée sur la face interne 2a du panneau 2 et la plaque de fixation 9 du doigt 8 est également occultée par une garniture interne de recouvrement 13 appliquée sur la face interne 3a du panneau 3.

Selon une variante de réalisation non représentée, le véhicule peut être équipé de deux dispositifs identiques de centrage et de limitation du débattement des deux panneaux 2, 3 et comprenant chacun un doigt 8 et un évidement 10 de réception de celui-ci.

Dans ce cas, les deux doigts 8 sont disposés de chaque côté du panneau 3 symétriquement par rapport au plan vertical médian longitudinal du véhicule en faisant saillie du bord 3b de ce panneau et s'étendant suivant une direction parallèle à ce plan médian. De même, les deux évidements 10 sont disposés de chaque côté du panneau de pavillon 2 en débouchant au niveau de son bord 2b en étant symétriques par rapport au plan vertical médian longitudinal du véhicule de façon à recevoir les deux doigts 8 en position de fermeture des deux panneaux 2, 3. Ces deux dispositifs étant identiques au dispositif précédemment décrit de la première variante de réalisation, il est inutile de les détailler davantage et, bien entendu, les tôles cintrées définissant les deux évidements 10 ainsi que les plaques de fixation 9 des deux doigts 8 sont occultées par deux garnitures internes de recouvrement comme dans la première variante de réalisation. L'utilisation de deux dispositifs de centrage permet d'assurer un maintien en rotation suivant l'axe longitudinal du véhicule entre les deux panneaux 2, 3.

Bien entendu, chaque doigt 8 peut être solidaire du panneau de pavillon 2 avec chaque évidement 10 réalisé dans le panneau de lunette arrière 3.

Les figures 3 à 6 montrent la présence d'un joint transversal en boudin 14 permettant d'assurer l'étanchéité à l'eau et solidaire du bord transversal du panneau 3 de façon à s'encastrer dans une rigole transversale 15 du panneau 2 en position de fermeture de ces panneaux. Le joint 14 est représenté comme étant situé au-dessus du doigt 8 en position fermée des panneaux 2, 3, mais il est possible d'agencer le joint 14 de telle façon qu'au moins sa partie située au voisinage du doigt 8 soit disposée sous ce dernier en position de fermeture des panneaux 2,3. Cette variante de réalisation permet de diminuer les bruits.

Le dispositif ci-dessus décrit de l'invention permet de limiter efficacement le débattement relatif des deux panneaux de toit rigide du véhicule décapotable sans compliquer la structure générale de ce toit et sans nuire à l'aspect esthétique de celui-ci lorsque vu de l'intérieur du véhicule. Une fois correctement réglé comme décrit précédemment, ce dispositif se positionnera automatiquement, sans aucun mécanisme, en utilisant la cinématique globale du toit fournie par le système à biellettes. Ce dispositif a ainsi l'avantage d'être passif, c'est-à-dire de ne pas nécessiter l'actionnement de moyens de verrouillage et de déverrouillage.

## Revendications (Revendications pour l'(les) Etat(s) contractant(s) suivant(s): AT, BE, CH, CY, DR, FI, FR, GR, IE, IT, LI, LU, MC, NL, PT, TR)

1. Véhicule automobile comprenant un élément constitué d'au moins deux panneaux indépendants (2, 3) de toit rigide escamotable du véhicule, respectivement de pavillon (2) et de lunette arrière (3), pouvant basculer d'une position de fermeture à laquelle les deux panneaux (2, 3) sont juxtaposés à une position d'ouverture escamotée dans une partie du coffre arrière (5) du véhicule à laquelle le panneau de pavillon (2) est disposé parallèlement au-dessus du panneau de lunette arrière (3), comprenant au moins un dispositif passif (8, 10) de centrage des deux panneaux (2, 3) à une position de fermeture de ceux-ci et de limitation du débattement relatif de ceux-ci par rapport au véhicule à la position de fermeture, **caractérisé en ce que** le dispositif de centrage et de limitation comprend un doigt (8) solidaire de l'un (3) des deux panneaux (2, 3) et un évidement (10) réalisé dans l'autre panneau (2) et dans lequel s'engage le doigt (8) en position de fermeture des deux panneaux (2, 3).

2. Véhicule selon la revendication 1, **caractérisé en ce que** le doigt (8) fait saillie du bord transversal (3b) du panneau correspondant (3) perpendiculairement à celui-ci et l'évidement (10) de réception de ce doigt débouche au niveau du bord transversal (2b) de l'autre panneau (2) et sur lequel vient en appui le bord transversal (3b) du panneau (3) en position de fermeture de ceux-ci.

3. Véhicule selon la revendication 1 ou 2, **caractérisé en ce que** le doigt (8) et l'évidement (10) de réception de celui-ci sont situés respectivement sur les faces internes (3a, 2a) des deux panneaux (3, 2) à leur position de fermeture.

4. Véhicule selon l'une des revendications 1 à 3, **caractérisé en ce que** le doigt (8) est solidaire du panneau de lunette arrière (3) et l'évidement (10) est réalisé dans le panneau de pavillon (2).

5. Véhicule selon l'une des revendications 1 à 4, **caractérisé en ce qu'**il comprend un seul dispositif de centrage et de limitation dont le doigt (8) s'étend centralement suivant une direction parallèle à l'axe longitudinal du véhicule en position de fermeture des deux panneaux (2, 3).

6. Véhicule selon l'une des revendications 1 à 4, **caractérisé en ce qu'**il comprend deux dispositifs de centrage et de limitation dont les deux doigts (8) sont disposés de chaque côté du panneau correspondant (3) et s'étendent suivant une direction parallèle à l'axe longitudinal du véhicule en position de fermeture des deux panneaux (2, 3).

7. Véhicule selon l'une des revendications 1 à 6, **caractérisé en ce que** chaque doigt (8) s'engage dans l'évidement correspondant (10) suivant un faible jeu.

8. Véhicule selon l'une des revendications 1 à 6, **caractérisé en ce que** chaque doigt (8) s'engage dans l'évidement correspondant (10) sans aucun jeu.

9. Véhicule selon l'une des revendications 1 à 8, **caractérisé en ce que** chaque évidement (10) est réalisé à partir d'une tôle cintrée (11) solidaire du panneau correspondant (2) et de préférence occultée par une garniture interne de recouvrement (12) et les moyens de fixation (9) de chaque doigt (8) au panneau correspondant (3) sont de préférence occultés par une garniture interne de recouvrement (13).

10. Véhicule selon l'une des revendications 1 à 9, **caractérisé en ce que** les deux panneaux (2, 3) ont leur mouvement de basculement commandé par l'intermédiaire d'un système de biellettes permettant de ranger les panneaux (2, 3) dans le coffre arrière (5) de façon que les deux panneaux (2, 3) soient disposés sensiblement parallèlement l'un au-dessus de l'autre.

## Revendications (Revendications pour l'(les) Etat(s) contractant(s) suivant(s): DE, ES, GB, SE)

1. véhicule automobile comprenant un toit rigide escamotable constitué d'au moins deux panneaux indépendants (2, 3), respectivement de pavillon (2) et de lunette arrière (3), pouvant basculer d'une position de fermeture à laquelle les deux panneaux (2, 3) sont juxtaposés transversalement au véhicule de façon à ce qu'un bord transversal (2b) du panneau de pavillon (2) vienne en appui sur un bord transversal (3b) du panneau de lunette arrière (3), à une position d'ouverture escamotée dans une partie du coffre arrière (5) du véhicule à laquelle le panneau de pavillon (2) est disposé parallèlement au-dessus du panneau de lunette arrière (3) et lesdits bords (2b,3b) qui étaient en appui en position de fermeture délimitent respectivement leur panneau (2,3) vers l'arrière, comprenant au moins un dispositif passif (8, 10) de centrage des deux panneaux (2, 3) à une position de fermeture de ceux-ci et de limitation du débattement relatif de ceux-ci par rapport au véhicule à la position de fermeture, **caractérisé en ce que** le dispositif de centrage et de limitation comprend un doigt (8) solidaire de l'un (3) des deux panneaux (2, 3) et un évidement (10) réalisé dans l'autre panneau (2) et dans lequel s'engage le doigt (8) en position de fermeture des deux panneaux (2, 3).

2. Véhicule selon la revendication 1, **caractérisé en ce que** le doigt (8) fait saillie du bord transversal (3b) du panneau correspondant (3) perpendiculairement à celui-ci et l'évidement (10) de réception de ce doigt débouche au niveau du bord transversal (2b) de l'autre panneau (2) et sur lequel vient en appui le bord transversal (3b) du panneau (3) en position de fermeture de ceux-ci.

3. Véhicule selon la revendication 1 ou 2, **caractérisé en ce que** le doigt (8) et l'évidement (10) de réception de celui-ci sont situés respectivement sur les faces internes (3a, 2a) des deux panneaux (3, 2) à leur position de fermeture.

4. Véhicule selon l'une des revendications 1 à 3, **caractérisé en ce que** le doigt (8) est solidaire du panneau de lunette arrière (3) et l'évidement (10) est réalisé dans le panneau de pavillon (2).

5. Véhicule selon l'une des revendications 1 à 4, **caractérisé en ce qu'**il comprend un seul dispositif de centrage et de limitation dont le doigt (8) s'étend centralement suivant une direction parallèle à l'axe longitudinal du véhicule en position de fermeture des deux panneaux (2, 3).

6. véhicule selon l'une des revendications 1 à 4, **caractérisé en ce qu'**il comprend deux dispositifs de centrage et de limitation dont les deux doigts (8) sont disposés de chaque côté du panneau correspondant (3) et s'étendent suivant une direction parallèle à l'axe longitudinal du véhicule en position de fermeture des deux panneaux (2, 3).

7. Véhicule selon l'une des revendications 1 à 6, **caractérisé en ce que** chaque doigt (8) s'engage dans l'évidement correspondant (10) suivant un faible jeu.

8. Véhicule selon l'une des revendications 1 à 6, **caractérisé en ce que** chaque doigt (8) s'engage dans l'évidement correspondant (10) sans aucun jeu.

9. Véhicule selon l'une des revendications 1 à 8, **caractérisé en ce que** chaque évidement (10) est réalisé à partir d'une tôle cintrée (11) solidaire du panneau correspondant (2) et de préférence occultée par une garniture interne de recouvrement (12) et les moyens de fixation (9) de chaque doigt (8) au panneau correspondant (3) sont de préférence occultés par une garniture interne de recouvrement (13).

10. véhicule selon l'une des revendications 1 à 9, **caractérisé en ce que** les deux panneaux (2, 3) ont leur mouvement de basculement commandé par l'intermédiaire d'un système de biellettes permettant de ranger les panneaux (2, 3) dans le coffre arrière (5) de façon que les deux panneaux (2, 3) soient disposés sensiblement parallèlement l'un au-dessus de l'autre.

## Claims

1. A motor vehicle comprising a rigid retractable roof constituted by at least two independent panels (2, 3) respectively roof panel (2) and rear window panel (3), being able to tilt from a closure position in which the two panels (2, 3) are juxtaposed transversely to the vehicle, such that a transverse edge (2b) of the roof panel (2) comes to rest on a transverse edge (3b) of the rear window panel (3), to an open position retracted in a part of the rear boot (5) of the vehicle to which the roof panel (2) is disposed in a parallel manner above the rear window panel (3) and the said edges (2b, 3b) which were resting in the closure position delimit respectively their panel (2, 3) towards the rear, comprising at least a passive device (8, 10) for centring of the two panels (2, 3) at a closure position of the latter and for limitation of the relative displacement thereof with respect to the vehicle at the closure position, **characterized in that** the centring and limitation device comprises a pin (8) integral with one (3) of the two panels (2, 3) and a recess (10) realized in the other panel (2) and in which the pin (8) engages in the closure position of the two panels (2, 3).

2. The vehicle according to Claim 1, **characterized in that** the pin (8) projects from the transverse edge (3b) of the corresponding panel (3) perpendicularly thereto and the recess (10) for receiving this pin opens out at the level of the transverse edge (2b) of the other panel (2) and on which the transverse edge (3b) of the panel (3) comes to rest in the closure position thereof.

3. The vehicle according to Claim 1 or 2, **characterized in that** the pin (8) and the recess (10) for receiving it are situated respectively on the internal faces (3a, 2a) of the two panels (3, 2) at their closure position.

4. The vehicle according to one of Claims 1 to 3, **characterized in that** the pin (8) is integral with the rear window panel (3) and the recess (10) is formed in the roof panel (2).

5. The vehicle according to one of Claims 1 to 4, **characterized in that** it comprises a single device for centring and limitation, the pin (8) of which extends centrally following a direction parallel to the longitudinal axis of the vehicle at the closure position of the two panels (2, 3).

6. The vehicle according to one of Claims 1 to 4, **characterized in that** it comprises two centring and limitation devices, the two pins (8) of which are disposed on each side of the corresponding panel (3) and extend following a direction parallel to the longitudinal axis of the vehicle in the closure position of the two panels (2, 3).

7. The vehicle according to one of Claims 1 to 6, **characterized in that** each pin (8) engages in the corresponding recess (10) following a slight play.

8. The vehicle according to one of Claims 1 to 6, **characterized in that** each pin (8) engages in the corresponding recess (10) without any play.

9. The vehicle according to one of Claims 1 to 8, **characterized in that** each recess (10) is realized from a bent sheet (11) integral with the corresponding panel (2) and preferably concealed by an internal covering trim (12) and the fixing means (9) of each pin (8) to the corresponding panel (3) are preferably concealed by an internal covering trim (13).

10. The vehicle according to one of Claims 1 to 9, **characterized in that** the two panels (2, 3) have their tilting movement controlled by means of a system of rods allowing the panels (2, 3) to be stored in the rear boot (5) so that the two panels (2, 3) are disposed substantially parallel one above the other.

## Patentansprüche

1. Kraftfahrzeug, das ein starres, versenkbares Dach aufweist, das aus mindestens zwei unabhängigen Feldern (2, 3) besteht, jeweils für den Himmel (2) und das Heckfenster (3), das von einer Schließposition, in der die zwei Felder (2, 3) quer zum Fahrzeug derart nebeneinander liegen, dass ein Querrand (2b) des Fahrzeughimmelfelds (2) zum Aufliegen auf einem Querrand (3b) des Heckfensterfelds (3) kommt, in eine Öffnungsposition, versenkt in einen Teil des hinteren Kofferraums (5) des Fahrzeugs schwenken kann, bei der das Fahrzeughimmelfeld (2) parallel oberhalb des Heckfensterfelds (3) angeordnet ist und die Ränder (2b, 3b), die in Schließposition in Auflage waren, jeweils ihr Feld (2, 3) nach hinten abgrenzen, mit mindestens einer passiven Vorrichtung (8, 10) zum Zentrieren der zwei Felder (2, 3) in einer Schließposition dieser und Begrenzung des relativen Ausschlagens dieser in Bezug zu dem Fahrzeug in der Schließposition, **dadurch gekennzeichnet, dass** die Zentrier- und Begrenzungsvorrichtung einen Finger (8) aufweist, der fest mit einem (3) der zwei Felder (2, 3) verbunden ist und eine Aussparung (10) aufweist, die in dem anderen Feld (2) hergestellt ist, und in die sich der Finger (8) in Schließposition der zwei Felder (2, 3) einfügt.

2. Fahrzeug nach Anspruch 1, **dadurch gekennzeichnet, dass** der Finger (8) von dem Querrand (3b) des entsprechenden Felds (3) senkrecht zu diesem vorsteht und die Aufnahmeaussparung (10) dieses Fingers auf dem Niveau des Querrands (2b) des anderen Felds (2) mündet und auf dem der Querrand (3b) des Felds (3) in deren Schließposition zum Aufliegen kommt.

3. Fahrzeug nach Anspruch 1 oder 2, **dadurch gekennzeichnet, dass** der Finger (8) und die Aussparung (10) zum Aufnehmen dieses jeweils auf den Innenseiten (3a, 2a) der zwei Felder (3, 2) in ihrer Schließposition liegen.

4. Fahrzeug nach einem der Ansprüche 1 bis 3, **dadurch gekennzeichnet, dass** der Finger (8) fest mit dem Heckfensterfeld (3) verbunden ist und dass die Aussparung (10) in dem Fahrzeughimmelfeld (2) eingerichtet ist.

5. Fahrzeug nach einem der Ansprüche 1 bis 4, **dadurch gekennzeichnet, dass** es eine einzige Zentrier- und Begrenzungsvorrichtung aufweist, deren Finger (8) sich zentral entlang einer Richtung parallel zu der Längsachse des Fahrzeugs in Schließposition der zwei Felder (2, 3) erstreckt.

6. Fahrzeug nach einem der Ansprüche 1 bis 4, **dadurch gekennzeichnet, dass** es zwei Zentrier- und Begrenzungsvorrichtungen aufweist, deren zwei Finger (8) auf jeder Seite des entsprechenden Felds (3) angeordnet sind und sich entlang einer Richtung parallel zu der Längsachse des Fahrzeugs in Schließposition der zwei Felder (2, 3) erstrecken.

7. Fahrzeug nach einem der Ansprüche 1 bis 6, **dadurch gekennzeichnet, dass** sich jeder Finger (8) in die entsprechende Aussparung (10) mit einem geringen Spiel eingefügt.

8. Fahrzeug nach einem der Ansprüche 1 bis 6, **dadurch gekennzeichnet, dass** sich jeder Finger (8) in die entsprechende Aussparung (10) ohne irgendein Spiel einfügt.

9. Kraftfahrzeug nach einem der Ansprüche 1 bis 8, **dadurch gekennzeichnet, dass** jede Aussparung (10) ausgehend von einem gebogenen Blech (11), das fest mit dem entsprechenden Feld (2) verbunden und vorzugsweise von einem inneren Abdeckfutter (12) verdeckt ist, und die Mittel (9) zum Befestigen jedes Fingers (8) an dem entsprechenden Feld (3) vorzugsweise von einem inneren Abdeckfutter (13) verdeckt sind.

10. Fahrzeug nach einem der Ansprüche 1 bis 9, **dadurch gekennzeichnet, dass** die Schwenkbewegung der zwei Felder (2, 3) über ein Schwingarmsystem gesteuert wird, das es erlaubt, die Felder (2, 3) in dem hinteren Kofferraum (5) derart zu verstauen, dass die zwei Felder (2, 3) im Wesentlichen parallel eines über dem anderen angeordnet sind.
